# FASCICULE DE BREVET EUROPEEN

(11) **EP 3 906 292 B1**
(45) Date de publication et mention de la délivrance du brevet: **21.08.2024**
(21) Numéro de dépôt: 19827754.3
(22) Date de dépôt: 23.12.2019
(51) Int. Cl.: C10L 1/197, C10L 10/14, C10L 1/16, C08F 118/10, C08F 210/02

(54) **UTILISATION DE COPOLYMÈRES SPÉCIFIQUES POUR ABAISSER LA TEMPÉRATURE LIMITE DE FILTRABILITÉ DE CARBURANTS OU COMBUSTIBLES**
VERWENDUNG VON SPEZIFISCHEN POLYMEREN ZUR SENKUNG DER FILTRIERBARKEITSGRENZE VON KRAFTSTOFFEN
USE OF SPECIFIC COPOLYMERS FOR LOWERING THE COLD FILTER PLUGGING POINT OF FUELS

(30) Priorité: 04.01.2019 FR 1900069
(43) Date de publication de la demande: 10.11.2021
(73) Titulaire: TotalEnergies OneTech, 92400 Courbevoie (FR); CENTRE NATIONAL DE LA RECHERCHE SCIENTIFIQUE (CNRS), 75016 Paris (FR); UNIVERSITE CLAUDE BERNARD - LYON 1, 69100 Villeurbanne (FR); CPE Lyon Formation Continue et Recherche - CPE Lyon FCR, 69100 Villeurbanne (FR)
(72) Inventeur: MONTEIL, Vincent, 69008 LYON (FR); BOISSON, Christophe, 01390 TRAMOYES (FR); ZARROUKI, Arthur, 84000 AVIGNON (FR); CENACCHI PEIRERA, Ana Maria, 69230 68, Chemin de la citadelle (FR); PREVOST, Julie, 69005 LYON (FR)
(74) Mandataire: Casalonga
(86) Numéro de dépôt international: PCT/EP2019/086893
(87) Numéro de publication internationale: WO 2020/141126

(56) Documents cités:
- US-A- 3 236 612
- US-A- 6 015 441
- US-A1- 2004 226 216
- US-A1- 2005 138 859
- US-A1- 2005 183 326

## Description

La présente invention concerne l'utilisation de copolymères particuliers pour abaisser la température limite de filtrabilité des carburants et des combustibles lors de leur stockage et/ou leur utilisation à basse température.

La présente invention concerne également des compositions d'additifs (ou « packages d'additifs ») contenant ces copolymères, ainsi que des compositions de carburant et de combustible additivées avec de tels copolymères.

### ETAT DE L'ART ANTERIEUR

Les carburants ou combustibles contenant des composés paraffiniques, notamment des composés contenant des groupements n-alkyle, iso-alkyle ou n-alcényle telles que des cires paraffiniques, sont connus pour présenter des propriétés d'écoulement détériorées à basse température, typiquement en dessous de 0°C. En particulier, on sait que les distillats moyens obtenus par distillation à partir d'huiles brutes d'origine pétrolière comme le gazole ou le fioul domestique, contiennent différentes quantités de n-alcanes ou n-paraffines selon leur provenance. Ces composés ont tendance à cristalliser à basse température, bouchant les tuyaux, canalisations, pompes et filtres, par exemple dans les circuits du carburant des véhicules automobiles. En hiver ou dans des conditions d'utilisation des carburants ou combustibles à température inférieure à 0°C, le phénomène de cristallisation de ces composés peut conduire à la diminution des propriétés d'écoulement des carburants ou combustibles et, par conséquent engendrer des difficultés lors de leur transport, de leur stockage et/ou de leur utilisation. L'opérabilité à froid des carburants ou combustibles est une propriété très importante, notamment pour assurer le démarrage des moteurs à froid. Si des paraffines sont cristallisées au fond du réservoir, elles peuvent être entraînées au démarrage dans le circuit de carburant et colmater notamment les filtres et préfiltres disposés en amont des systèmes d'injection (pompe et injecteurs). De même, pour le stockage des fiouls domestiques, si des paraffines précipitent en fond de cuve, elles peuvent être entraînées et obstruer les conduites en amont de la pompe et du système d'alimentation de la chaudière (gicleur et filtre).

Ces problèmes sont bien connus dans le domaine des carburants et combustibles, et de nombreux additifs ou mélanges d'additifs ont été proposés et commercialisés pour réduire la taille des cristaux de paraffines et/ou changer leur forme et/ou les empêcher de se former. Une taille de cristaux la plus faible possible est préférée car elle minimise les risques de bouchage ou de colmatage des filtres.

Les agents d'amélioration d'écoulement habituels dits fluidifiants à froid (en anglais « cold flow improvers » ou CFI) sont en général des co- et ter-polymères d'éthylène et d'ester(s) vinylique(s) et/ou acrylique(s), employés seuls ou en mélange. Ces additifs fluidifiants à froid (CFI), destinés à abaisser la Température Limite de Filtrabilité (TLF), inhibent la croissance des cristaux à basse température en favorisant la dispersion des cristaux de paraffine ; ce sont par exemple les polymères d'éthylène et d'acétate de vinyle et/ou de propionate de vinyle (EVA ou EVP), aussi communément appelés additifs de TLF. Ce type d'additifs, très largement connu par l'homme du métier, est systématiquement ajouté aux distillats moyens classiques en sortie de raffinerie. Ces distillats additivés sont utilisés comme carburant pour moteur Diesel ou comme combustible de chauffage. Des quantités supplémentaires de ces additifs peuvent être ajoutées aux carburants vendus en stations service notamment pour satisfaire les spécifications dites Grand Froid.

US 2005/0183326 A1 décrit l'utilisation de copolymères d'éthylène et d'ester vinylique particuliers pour améliorer les performances de tenu à froid de carburants dérives d'huile animale ou végétales ainsi que leur mélanges avec des bases issues du pétrole.

Du fait de la diversification des sources de carburants et de combustibles, il existe toujours un besoin de trouver de nouveaux additifs pour abaisser la température limite de filtrabilité des carburants ou combustibles.

Ce besoin est particulièrement important pour les carburants ou combustibles comprenant un ou plusieurs composés paraffiniques, par exemple des composés contenant des groupements n-alkyle, iso-alkyle ou n-alcényle présentant une tendance à la cristallisation à basse température.

Notamment, les distillats utilisés dans les carburants et combustibles sont de plus en plus issus d'opérations de raffinage plus complexes que ceux issus de la distillation directe du pétrole, et peuvent provenir notamment des procédés de craquage, d'hydrocraquage, de craquage catalytique et des procédés de viscoréduction. Avec la demande croissante en carburants Diesel, le raffineur a tendance à introduire dans ces carburants des coupes plus difficilement exploitables, comme les coupes les plus lourdes issues des procédés de craquage et de viscoréduction qui sont riches en paraffines à longues chaînes.

En outre, des distillats synthétiques issus de la transformation du gaz tels que ceux issus du procédé Fischer Tropsch, ainsi que des distillats résultant du traitement de biomasses d'origine végétale ou animale, comme notamment le NexBTL et des distillats comprenant des ester d'huiles végétales ou animales sont apparus sur le marché, et constituent une nouvelle gamme de produits utilisables comme base pour formuler des carburants et ou des fiouls domestiques. Ces produits comprennent également des hydrocarbures à chaînes paraffiniques longues.

De plus, on a constaté l'arrivée de nouveaux pétroles bruts sur le marché, beaucoup plus riches en paraffines que ceux communément raffinés, et dont la température de filtrabilité des distillats issus de distillation directe était difficilement améliorée par les additifs de filtrabilité classique au même titre que ceux précédemment cités.

On a constaté que les propriétés de tenue à froid des distillats obtenus par combinaison des anciennes bases et de ces nouvelles sources était difficilement améliorée par l'ajout d'additifs classiques de filtrabilité, entre autres du fait de la présence importante de paraffines à longue chaîne et de la distribution complexe en paraffines dans leur composition. On a pu noter en effet dans ces nouvelles combinaisons de distillats, des distributions discontinues en paraffines, en présence desquelles les additifs de filtrabilité connus ne sont pas toujours suffisamment efficaces.

Il existe donc un besoin d'adapter les additifs de tenue à froid à ces nouveaux types de bases pour carburants et combustibles, considérés comme particulièrement difficiles à traiter.

La présente invention s'applique aux carburants et combustibles contenant non seulement des distillats classiques tels que ceux issus de la distillation directe des pétroles bruts, mais également aux bases issues d'autres sources, telles que celles décrites ci-avant.

Ainsi, le but de la présente invention est de proposer de nouveaux additifs et des concentrés les contenant qui peuvent avantageusement être utilisés comme additifs pour améliorer la tenue à froid des carburants ou combustibles, lors de leur stockage et/ou leur utilisation à basse température, typiquement inférieure à 0°C.

Le but de la présente invention est en particulier de proposer de nouveaux additifs pour carburants et combustibles, et des concentrés contenant de tels additifs, qui permettent de diminuer la Température Limite de Filtrabilité (TLF).

Enfin, un autre objet de l'invention est de proposer une composition de carburant ou de combustible une tenue à froid améliorée, en particulier à des températures inférieures à 0°C, de préférence inférieures à -5°C.

### OBJET DE L'INVENTION

La demanderesse a maintenant découvert que des copolymères particuliers, tels que décrits ci-après, possédaient des propriétés inattendues pour diminuer la température limite de filtrabilité des compositions de carburants et de combustibles, y compris celles qui sont particulièrement difficiles à traiter.

La présente invention a ainsi pour objet l'utilisation, pour diminuer la température limite de filtrabilité d'une composition de carburant ou de combustible, d'un ou plusieurs copolymère(s) contenant uniquement les motifs suivants :
- de 80 à 95% en moles d'un motif de formule (I) suivante : 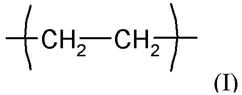 et
- de 5 à 20% en moles d'au moins un motif de formule (II) suivante : 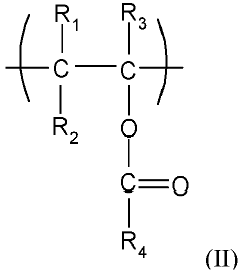
dans laquelle
R₁, R₂, et R₃, identiques ou différents, représentent un atome d'hydrogène ou un groupe alkyle en C₁ à C₄, et R₄ représente un groupe alkyle linéaire en C₅ à C₁₇,
ledit copolymère ayant une masse molaire moyenne en nombre Mn comprise entre 3000 et 7000 g.mol⁻¹.

L'invention a également pour objet une composition d'additifs comprenant un tel copolymère en association avec au moins un autre additif de tenue à froid différent des copolymères selon l'invention, ainsi qu'un concentré d'additifs contenant une telle composition.

L'invention a également pour objet une composition de carburant ou de combustible, comprenant :
- au moins une coupe d'hydrocarbures issue d'une ou de plusieurs sources choisies parmi le groupe consistant en les sources minérales (de préférence le pétrole), animales, végétales et synthétiques, et
- au moins un copolymère tel que défini ci-avant.

Selon un mode de réalisation, cette composition comprend en outre au moins un autre additif de tenue à froid différent des copolymères selon l'invention définis ci-avant.

D'autres objets, caractéristiques, aspects et avantages de l'invention apparaîtront encore plus clairement à la lecture de la description et des exemples qui suivent.

Dans ce qui va suivre, et à moins d'une autre indication, les bornes d'un domaine de valeurs sont comprises dans ce domaine, notamment dans les expressions « compris entre » et « allant de ... à ... ».

Par ailleurs, les expressions « au moins un » et « au moins » utilisées dans la présente description sont respectivement équivalentes aux expressions « un ou plusieurs » et « supérieur ou égal ».

Enfin, de manière connue en soi, on désigne par composé ou groupe en C_{N} un composé ou un groupe contenant dans sa structure chimique N atomes de carbone.

### DESCRIPTION DETAILLEE

### Le copolymère :

L'invention met en oeuvre un copolymère comprenant un motif répétitif de formule (I) suivante : 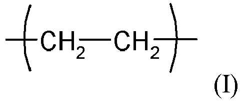 Ce motif est issu du monomère éthylène.

Il représente de 80 à 95% en moles, par rapport au nombre de moles total de motifs du copolymère.

De préférence, le copolymère comprend de 84 à 91% en moles de motifs de formule (I).

Le copolymère employé dans la présente invention comprend également un ou plusieurs motif(s) répétitif(s) répondant à la formule (II) suivante : 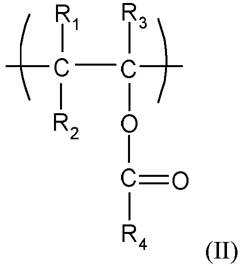 dans laquelle
R₁, R₂, et R₃, identiques ou différents, représentent un atome d'hydrogène ou un groupe alkyle en C₁ à C₄, et R₄ représente un groupe alkyle linéaire en C₅ à C₁₇.

Selon un mode de réalisation préféré, R₁, R₂, et R₃, identiques ou différents, représentent un atome d'hydrogène ou un groupe méthyle. De manière particulièrement préférée, R₁, R₂, et R₃ représentent un atome d'hydrogène.

Selon un mode de réalisation également préféré, R₄ représente un groupe alkyle linéaire en C₅ à C₁₅, de préférence en C₅ à C₁₃, plus préférentiellement encore en C₅ à C₁₁.

Le ou les motifs de formule (II) représente(nt) de 5 à 20% en moles, par rapport au nombre de moles total de motifs du copolymère.

De préférence, ledit copolymère comprend de 9 à 16% en moles de motifs de formule (II).

Les motifs de formule (II) sont avantageusement issus de monomères choisis parmi les esters d'acide carboxylique en C₆ à C₁₈ et d'alcools vinyliques, c'est-à-dire les esters vinyliques de formule (IIA) suivante : 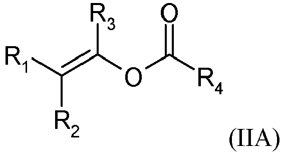 dans laquelle R₁, R₂, R₃ et R₄ sont tels que définis ci-avant.

Selon un mode de réalisation particulièrement préféré, le ou les motifs de formule (II) sont issus du ou des monomères hexanoate de vinyle et laurate de vinyle.

Le copolymère selon l'invention est avantageusement choisi parmi les copolymères d'éthylène et d'esters d'acide carboxylique en C₆ à C₁₈ et d'alcool vinylique (éthénol). Des copolymères particulièrement préférés sont les copolymères d'éthylène et d'hexanoate de vinyle, les copolymères d'éthylène et de laurate de vinyle, et leurs mélanges.

Le copolymère employé dans la présente invention est avantageusement un copolymère statistique.

Le copolymère employé dans la présente invention contient uniquement des motifs de formule (I) et des motifs de formule (II).

Un tel copolymère est avantageusement obtenu par copolymérisation de l'éthylène avec un ou plusieurs monomères choisis parmi les esters vinyliques de formule (IIA) telle que définie ci-avant.

Il est toutefois entendu que l'on ne sortirait pas de l'invention si l'on obtenait le polymère selon l'invention à partir de monomères différents, dans la mesure où le copolymère final correspond à un polymère comprenant des motifs de formule (I) et des motifs de formule (II) tels que définis ci-avant. Par exemple, on ne sortirait pas de l'invention, si l'on obtenait le polymère par polymérisation de monomères différents, suivie d'une post-fonctionnalisation.

Le polymère selon l'invention peut être préparé selon tout procédé connu de polymérisation. Les différentes techniques et conditions de polymérisation sont largement décrites dans la littérature et relèvent des connaissances générales de l'homme de l'art.

Les copolymères statistiques peuvent notamment être synthétisés par polymérisation radicalaire classique : on procède généralement par mélange des différents monomères dans un solvant approprié, et la copolymérisation est amorcée au moyen d'un agent de polymérisation radicalaire.

Selon un mode de réalisation particulièrement préféré, le copolymère employé dans la présente invention est obtenu, ou susceptible d'être obtenu, par une réaction de polymérisation radicalaire effectuée dans un solvant organique à une pression inférieure ou égale à 20.10⁶ Pa (200 bars) et à une température inférieure ou égale à 150°C, de préférence inférieure ou égale à 120°C.

Dans ce mode de réalisation, la pression à laquelle est effectuée la polymérisation est de préférence comprise dans la gamme allant de 5.10⁶ Pa (50 bars) à 15.10⁶ Pa (150 bars). La température est de préférence comprise dans la gamme allant de 50°C à 150°C, de préférence de 60 à 120°C, et plus préférentiellement de 70 à 100°C.

Des solvants organiques particulièrement appropriés sont par exemple les carbonates d'alkyle tels que le carbonate de diéthyle et le carbonate de diméthyle, le toluène, et le tétrahydrofurane.

Les conditions décrites ci-dessus correspondent à des conditions beaucoup plus douces que celles employées classiquement, dans les procédés industriels de copolymérisation d'éthylène et d'esters vinyliques, où la polymérisation est effectuée à des températures supérieures à 200°C et des pressions supérieures à 200.10⁶ Pa (2000 bars).

Les copolymères obtenus dans les conditions de polymérisation douces décrites ci-avant ont, avantageusement, une masse molaire moyenne en poids (Mw) comprise entre 3600 et 10000 g.mol⁻¹, plus préférentiellement entre 4000 et 8000 g.mol⁻¹.

La masse molaire moyenne en nombre (Mn) des copolymères selon l'invention est comprise entre 3000 et 7000 g.mol⁻¹, plus préférentiellement entre 3000 et 4500 g.mol⁻¹. Les masses molaires moyennes en nombre et en poids sont mesurées par chromatographie d'exclusion stérique (SEC en anglais «Size Exclusion Chromatography »).

### L'utilisation:

Le copolymère décrit ci-avant est utilisé pour améliorer la température limite de filtrabilité d'une composition de carburant ou de combustible, en particulier d'une composition choisie parmi les gazoles, les biodiesels, les gazoles de type Bₓ tels que définis ci-après et les fiouls, de préférence, les fiouls domestiques (FOD).

La température limite de filtrabilité, ou TLF, est mesurée selon la norme NF EN 116.

La composition de carburant ou de combustible est telle que décrite ci-après et comprend avantageusement au moins une coupe d'hydrocarbures issue d'une ou de plusieurs sources choisies parmi le groupe consistant en les sources minérales, de préférence le pétrole, les sources animales, végétales et synthétiques.

Le copolymère peut être ajouté dans les carburants ou combustibles au sein de la raffinerie, et/ou être incorporé en aval de la raffinerie, éventuellement en mélange avec d'autres additifs sous forme d'un concentré d'additif, encore appelé selon l'usage « package d'additifs».

Le copolymère est avantageusement utilisé dans le carburant ou combustible à une teneur d'au moins 0,0005% en poids, par rapport au poids total de la composition de carburant ou de combustible.

De préférence, la teneur dudit copolymère va de 0,001 à 0,2% en poids, de préférence de 0,005 à 0,1% en poids, et mieux encore de 0,01 à 0,03% en poids, par rapport au poids total de la composition de carburant ou de combustible.

### La composition d'additifs :

L'invention a également pour objet une composition d'additifs comprenant un ou plusieurs copolymère(s) selon l'invention, tel(s) que décrit(s) ci-avant, et un ou plusieurs additif(s) de tenue à froid différent(s) des copolymères constitués de motifs de formule (I) et de motifs de formule (II) tels que décrits ci-avant.

Le ou les additif(s) de tenue à froid peuvent être en particulier choisis parmi les additifs fluidifiant(s) à froid, les additifs d'anti-sédimentation et/ou dispersants de paraffines, les additifs boosters de TLF, et les mélanges de ces additifs.

Les additifs fluidifiants à froid (CFI) peuvent être notamment choisis parmi les copolymères et terpolymères d'éthylène et d'ester(s) vinylique(s) et/ou acrylique(s), différent(s) des copolymères constitués de motifs de formule (I) et de motifs de formule (II). A titre d'exemple, on peut citer les copolymères éthylène/acétate de vinyle (EVA), éthylène/propionate de vinyle (EVP), éthylène/éthanoate de vinyle (EVE), éthylène/méthacrylate de méthyle (EMMA), et éthylène/fumarate d'alkyle décrits, par exemple, dans les documents US3048479, US3627838, US3790359, US3961961 et EP261957. On peut également citer les terpolymères d'éthylène, d'acétate de vinyle et d'un autre ester vinylique, par exemple le néodécanoate de vinyle.

Le ou les additif(s) anti-sédimentation et/ou dispersant de paraffines (WASA) peuvent être notamment, mais non limitativement, choisis dans le groupe constitué par les copolymères acide (méth)acrylique/(méth)acrylate d'alkyle amidifiés par une polyamine, les produits de condensation d'un ou plusieurs acides carboxyliques avec une ou plusieurs polyamines, les alkénylsuccinimides de polyamine, les dérivés d'acide phtalamique et d'amine grasse à double chaîne, les résines alkylphénol éventuellement greffées, les résines alkylphénol-aldéhydes modifiées. Des exemples de tels additifs sont donnés dans les documents suivants : EP261959, EP593331, EP674689, EP327423, EP512889, EP832172 ; US2005/0223631 ; US5998530 ; WO93/14178 ; WO2012/085865.

Les additifs anti-sédimentation et/ou dispersant de paraffines (WASA) particulièrement préférés sont choisis parmi les résines alkylphénol et les résines alkylphénol greffées par exemple par des groupes fonctionnels tels que des polyamines.

Les additifs dits « boosters de TLF » ont pour fonction d'agir en combinaison avec les additifs de TLF de manière à en augmenter l'efficacité, et sont généralement présents en quantité très inférieure à celle du ou des additif(s) de TLF. L'art antérieur décrit abondamment de tels boosters.

La composition d'additifs peut avantageusement comprendre de 40 à 90% en poids de copolymère(s) selon l'invention, de préférence de 50 à 80% en poids, plus préférentiellement de 60 à 70% en poids par rapport au poids total de la composition d'additifs.

La composition d'additifs peut avantageusement comprendre en outre de 1 à 50% en poids d'additif(s) anti-sédimentation et/ou dispersant de paraffines tel(s) que décrit(s) précédemment, de préférence de 2 à 30% en poids, plus préférentiellement de 5 à 20% en poids, par rapport au poids total de la composition d'additifs.

La composition d'additifs peut avantageusement comprendre en outre de 0,1 à 15% en poids d'additif(s) booster(s) de TLF, de préférence de 0,5 à 10% en poids, plus préférentiellement de 0,6 à 5% en poids, par rapport au poids total de la composition d'additifs.

La composition d'additifs peut également comprendre un ou plusieurs autres additifs couramment utilisés dans les carburants ou combustibles, différents des copolymères selon l'invention et des additifs de tenue à froid décrits précédemment.

La composition d'additifs peut, typiquement, comprendre un ou plusieurs autres additifs choisis parmi les détergents, les agents anti-corrosion, les dispersants, les désémulsifiants, les biocides, les réodorants, les additifs procétane, les modificateurs de friction, les additifs de lubrifiance ou additifs d'onctuosité, les agents d'aide à la combustion (promoteurs catalytiques de combustion de suie), les agents anti-usure et/ou les agents modifiant la conductivité.

Parmi ces additifs, on peut citer en particulier :
a) les additifs procétane, notamment (mais non limitativement) choisis parmi les nitrates d'alkyle, de préférence le nitrate de 2-éthyl hexyle, les peroxydes d'aryle, de préférence le peroxyde de benzyle, et les peroxydes d'alkyle, de préférence le peroxyde de ter-butyle;
b) les additifs anti-mousse, notamment (mais non limitativement) choisis parmi les polysiloxanes, les polysiloxanes oxyalkylés, et les amides d'acides gras issus d'huiles végétales ou animales. Des exemples de tels additifs sont donnés dans EP861882, EP663000, EP736590 ;
c) les additifs détergents et/ou anti-corrosion, notamment (mais non limitativement) choisis dans le groupe constitué par les amines, les succinimides, les alkénylsuccinimides, les polyalkylamines, les polyalkyles polyamines, les polyétheramines, les sels d'ammonium quaternaire et les dérivés du triazole ; des exemples de tels additifs sont donnés dans les documents suivants : EP0938535, US2012/0010112 et WO2012/004300. On peut également avantageusement employer les copolymères blocs formés d'au moins un motif polaire et un motif apolaire, tels que par exemple ceux décrits dans la demande de brevet FR 1761700 au nom de la Demanderesse ;
d) les additifs de lubrifiance ou agents anti-usure, notamment (mais non limitativement) choisis dans le groupe constitué par les acides gras et leurs dérivés ester ou amide, notamment le monooléate de glycérol, et les dérivés d'acides carboxyliques mono- et polycycliques. Des exemples de tels additifs sont donnés dans les documents suivants: EP680506, EP860494, WO98/04656, EP915944, FR2772783, FR2772784.

La présente invention a également pour objet un concentré d'additifs comprenant une composition d'additifs telle que décrite ci-avant, en mélange avec un liquide organique. Le liquide organique est avantageusement inerte vis-à-vis des constituants de la composition d'additifs, et miscible aux carburants ou combustibles, notamment ceux issus d'une ou de plusieurs sources choisies parmi le groupe consistant en les sources minérale, de préférence le pétrole, animale, végétale et synthétique.

Le liquide organique est de préférence choisi parmi les solvants hydrocarbonés aromatiques tels que le solvant commercialisé sous le nom « SOLVESSO », les alcools, les éthers et autres composés oxygénés, et les solvants paraffiniques tels que l'hexane, pentane ou les isoparaffines, seuls ou en mélange.

### La composition de carburant ou de combustible :

L'invention concerne également une composition de carburant ou de combustible, comprenant :
- au moins une coupe d'hydrocarbures issue d'une ou de plusieurs sources choisies parmi le groupe consistant en les sources minérales, animales, végétales et synthétiques, et
- au moins un copolymère tel que défini ci-avant.

Les sources minérales sont de préférence le pétrole.

La composition de carburant ou de combustible selon l'invention comprend avantageusement ledit ou lesdits copolymère(s) en une teneur d'au moins 0,0005% en poids, par rapport au poids total de la composition de carburant ou de combustible. De préférence, la teneur en copolymère(s) va de 0,001 à 0,2% en poids, de préférence de 0,005 à 0,1% en poids, et mieux encore de 0,01 à 0,03% en poids, par rapport au poids total de la composition de carburant ou de combustible.

Selon un mode de réalisation préféré, ladite composition comprend en outre au moins un additif de tenue à froid différent des copolymères selon l'invention constitués motifs de formule (I) et des motifs de formule (II), choisi parmi les additifs fluidifiants à froid (CFI) et les additifs d'anti-sédimentation et/ou dispersants de paraffines (WASA), et/ou les additifs boosters de TLF. De tels additifs sont avantageusement choisis parmi ceux décrits ci-avant.

Dans ce mode de réalisation, la composition de carburant ou de combustible comprend avantageusement l'additif ou les additifs anti-sédimentation et/ou dispersant(s) de paraffines et/ou les additifs boosters de TLF en une teneur allant de 0,0001 à 0,1% en poids, de préférence de 0,0005 à 0,05% en poids, plus préférentiellement de 0,001 à 0,02% en poids, par rapport au poids total de la composition de carburant ou de combustible.

Les carburants ou combustibles peuvent être choisis parmi les carburants ou combustibles hydrocarbonés liquides, seuls ou en mélange. Les carburants ou combustibles hydrocarbonés liquides comprennent notamment des distillats moyens de température d'ébullition comprise entre 100 et 500°C. Ces distillats peuvent par exemple être choisis parmi les distillats obtenus par distillation directe d'hydrocarbures bruts, les distillats sous vide, les distillats hydrotraités, les distillats issus du craquage catalytique et/ou de l'hydrocraquage de distillats sous vide, les distillats résultant de procédés de conversion type ARDS (par désulfuration de résidu atmosphérique) et/ou de viscoréduction, les distillats issus de la valorisation des coupes Fischer Tropsch, les distillats résultant de la conversion BTL (biomass to liquid) de la biomasse végétale et/ou animale, prise seule ou en combinaison, et/ou les biodiesels d'origine animale et/ou végétale et/ou les huiles et/ou esters d'huiles végétales et/ou animales.

La teneur en soufre des carburants ou combustibles est, de préférence, inférieure à 5000 ppm, de préférence inférieure à 500 ppm, et plus préférentiellement inférieure à 50 ppm, voire même inférieure à 10 ppm, et avantageusement sans soufre.

Le carburant ou combustible est, de préférence, choisi parmi les gazoles, les biodiesel, les gazoles de type Bₓ et les fiouls, de préférence, les fiouls domestiques (FOD).

On entend par gazole de type Bₓ pour moteur Diesel (moteur à compression), un carburant gazole qui contient x% (v/v) d'esters d'acides gras ou d'huiles végétales ou animale (y compris huiles de cuisson usagées) transformés par un procédé chimique appelé transestérification faisant réagir cette huile avec un alcool afin d'obtenir des esters d'acide gras (EAG). Avec le méthanol et l'éthanol, on obtient respectivement des esters méthyliques d'acides gras (EMAG) et des esters éthyliques d'acides gras (EEAG). La lettre "B" est suivie par un nombre x allant de 0 à 100, qui indique le pourcentage d'EAG contenu dans le gazole. Ainsi, un B99 contient 99% de EAG et 1% de distillats moyens d'origine fossile, le B20, 20% de EAG et 80% de distillats moyens d'origine fossile etc... On distingue donc les carburants gazoles de type Ba qui ne contiennent pas d'esters d'acide gras, des carburants gazoles de type Bx qui contiennent x% (v/v) d'esters d'huiles végétales ou animales ou d'acides gras, le plus souvent esters méthyliques (EMHV ou EMAG). Lorsque l'EAG est utilisé seul dans les moteurs, on désigne le carburant par le terme B100.

Le carburant ou combustible peut également contenir des huiles végétales hydrotraitées, connues de l'homme du métier sous l'appellation HVO (de l'anglais « hydrotreated vegetable oil ») ou HDRD (de l'anglais « hydrogenation-derived renewable diesel »).

Selon un mode de réalisation préféré, le carburant ou combustible est choisi parmi les gazoles, les biodiesel et les gazoles de type Bₓ, les huiles végétales hydrotraitées (HVO), et leurs mélanges.

La composition de carburant ou combustible peut également contenir un ou plusieurs additifs additionnels, différents des copolymères et des additifs de tenue à froid décrits ci-avant. De tels additifs peuvent être notamment choisis parmi les détergents, les agents anti-corrosion, les dispersants, les désémulsifiants, les agents anti-mousse, les biocides, les réodorants, les additifs procétane, les modificateurs de friction, les additifs de lubrifiance ou additifs d'onctuosité, les agents d'aide à la combustion (promoteurs catalytiques de combustion de suie), les agents anti-usure et/ou les agents modifiant la conductivité. Des additifs particulièrement préférés sont ceux décrits ci-avant en ce qui concerne la composition d'additifs selon l'invention.

Ces additifs additionnels peuvent être en général présents en quantité allant de 50 à 1000 ppm (chacun).

Selon un autre mode de réalisation de l'invention, un procédé pour abaisser la température limite de filtrabilité d'une composition de carburant ou de combustible comprend une étape de traitement de ladite composition avec au moins un copolymère tel que décrit ci-avant.

Selon un mode de réalisation, ce procédé comprend les étapes successives de :
a) détermination d'une composition d'additif(s) la plus adaptée à la composition de carburant ou combustible à traiter ainsi que de la quantité (ie du taux de traitement) nécessaire pour atteindre une valeur maximale de température limite de filtrabilité pour la composition de carburant ou combustible spécifique, ladite composition d'additif(s) comprenant au moins un copolymère selon l'invention et, en option, au moins un additif de tenue à froid, choisi parmi les additifs fluidifiants à froid, les additifs d'anti-sédimentation et/ou dispersants de paraffines et les additifs boosters de TLF, différent(s) des copolymères comprenant des motifs de formule (I) et des motifs de formule (II);
b) traitement de la composition de carburant ou combustible avec la quantité déterminée à l'étape a) de ladite composition d'additif(s).

Le procédé selon l'invention est typiquement destiné à une composition de carburant ou combustible telle que décrite ci-avant.

L'étape a) est réalisée selon tout procédé connu et relève de la pratique courante dans le domaine de l'additivation des carburants ou combustibles. Cette étape implique de définir une valeur cible puis de déterminer l'amélioration qui est requise pour atteindre cette valeur.

La valeur de TLF maximale est définie en référence à la norme NF EN 116. La détermination de la quantité de composition d'additif(s) à ajouter à la composition de carburant ou combustible pour atteindre la valeur cible sera réalisée typiquement par comparaison avec la composition de carburant ou combustible sans ladite composition d'additif(s).

La quantité de copolymère nécessaire pour traiter la composition de carburant ou de combustible peut varier en fonction de la nature et de l'origine du carburant ou combustible, en particulier en fonction du taux et de la nature des composés paraffiniques qu'il contient. La nature et l'origine du carburant ou combustible peut donc être également un facteur à prendre en compte pour l'étape a).

Le procédé ci-avant peut également comprendre une étape supplémentaire après l'étape b) de vérification de la cible atteinte et/ou d'ajustement du taux de traitement avec la composition d'additif(s).

Les exemples ci-après sont donnés à titre d'illustration de l'invention, et ne sauraient être interprétés de manière à en limiter la portée.

### EXEMPLES

### Exemple 1 : Synthèse de différents polymères

### Composés de départ :

Le tétrahydrofurane ou THF (non stabilisé) est fourni par Biosolve (99%) et purifié par un dispositif de purification de solvant M.Braun MB-SPS.

Le carbonate de diméthyle est fourni par Sigma-Aldrich (99%). Il est séché sur tamis moléculaire 3 Å et dégazé par bullage d'argon continu. Le N,N'-azobis(isobutyronitrile) (AIBN, Fluka, 98 %) est utilisé directement sans purification.

L'hexanoate de vinyle (TCI Chemicals, 99%, stabilisé 4-methoxyphenol) est séché sur CaH2 puis cryodistillé sous vide. Il est conservé à -20 °C sous argon.

Le laurate de vinyle (Sigma-Aldrich, 99%) est utilisé sans purification supplémentaire. Il est conservé au réfrigérateur sous argon.

Le propanal (Sigma-Aldrich, 97%) est utilisé sans purification supplémentaire et est conservé au réfrigérateur sous argon. L'éthylène (N35, >99,95%) est fourni par Air Liquide. Il est utilisé sans purification supplémentaire.

### Généralités :

Les copolymérisations de l'éthylène décrites ci-après sont réalisées dans un réacteur en acier inoxydable de la société Parr Instrument Co., équipé d'une pâle d'agitation, d'un four électrique, d'un sas d'injection, de capteurs de pression et de température, ainsi que d'une soupape de sécurité (disque de rupture, 340 bars). La pression d'éthylène maximale de travail est 250 bars. Le réacteur est fermé hermétiquement à l'aide de deux mors en acier. Afin de pouvoir atteindre des pressions élevées en éthylène, est utilisé un ballast intermédiaire d' 1,5 l. Il est équipé d'une soupape de sécurité (disque de rupture, 340 bars). Le remplissage du ballast est réalisé par liquéfaction de l'éthylène à -20 °C à une pression de 42 bars d'éthylène. Une fois l'équilibre atteint, le ballast est ramené à température ambiante. La pression du ballast, à 20 °C, est d'environ 220 bars. Suivant les conditions de polymérisation, le ballast est chauffé afin d'atteindre une différence de pression suffisante (ΔP > 100 bars). Pour les copolymérisations à 75 bars, le ballast est maintenu à température ambiante.

### Protocole de synthèse d'un copolymère statistique d'éthylène (86,9% molaire) et d'hexanoate de vinyle (13,1% molaire), selon l'invention:

50 mg d'AIBN et 15ml d'hexanoate de vinyle sont introduits dans un Schlenk sous argon qui est finalement complété avec du THF jusqu'à 50ml (35 ml THF). Les composés conservés à froid ne sont prélevés qu'une fois revenus à température ambiante.

Le réacteur est également conditionné par trois cycles vide-argon à chaud. La température du réacteur doit être inférieure de 2 °C à la température de polymérisation (70°C), afin d'assurer une stabilisation rapide de la température une fois le mélange réactionnel introduit.

Avant l'introduction de la solution, l'agitation est enclenchée. La solution est injectée dans le réacteur via une canule sous balayage d'argon à travers un sas d'injection. L'alimentation en argon est ensuite arrêtée. L'alimentation en éthylène est dans un premier temps réalisé à travers le sas d'injection, afin d'entraîner le cas échéant la solution se situant toujours dans le sas, jusqu'à une pression de 20 bars. Le sas est ensuite isolé du réacteur à proprement parler, l'alimentation en éthylène est poursuivie jusqu'à l'atteinte de la pression de polymérisation désirée (75 bars). La pression et la température du réacteur sont suivies, et enregistrées, au cours de la polymérisation. De l'éthylène est injecté à nouveau au cours de la polymérisation, si besoin en est, pour maintenir la pression constante.

En fin de polymérisation (après 2h de réaction), le réacteur est refroidi jusqu'à 30 °C à l'aide d'un bain de glace, afin de pouvoir effectuer la dépressurisation, lente, du réacteur dans les meilleures conditions de sécurité. Le réacteur est ensuite ouvert, et le mélange réactionnel récupéré dans un cristallisoir, qui est laissé à évaporer sous sorbonne une nuit durant.

Le copolymère est ensuite purifié selon le protocole suivant : Une fois le solvant de polymérisation évaporé, le contenu du cristallisoir est dissous dans du THF (20 ml) à chaud (50 °C). La solution est ensuite ajoutée progressivement dans un bécher de méthanol (2 l), agité avec un barreau aimanté, préalablement réservé au congélateur (-20 °C, 3 heures). La solution est laissée à agiter une nuit. Le polymère précipite. 95% du méthanol est ensuite retiré. Le reste du méthanol est laissé à évaporer, le protocole de lavage est ensuite réalisé une seconde fois, à la différence près que 100% du méthanol est éliminé cette fois en fin de lavage. Le copolymère finalement récupéré est séché sous cloche à vide (90°C, 4 heures).

### Protocole de synthèse d'un copolymère statistique d'éthylène (73,6% molaire) et d'hexanoate de vinyle (26,4% molaire), comparatif:

Le protocole ci-avant a été répété, en employant 30 ml d'hexanoate de vinyle et donc 20 ml de THF. Le temps de polymérisation est de 2h30.

### Protocole de synthèse d'un copolymère statistique d'éthylène (90,9% molaire) et de laurate de vinyle (9,1% molaire), selon l'invention:

Le protocole ci-avant a été répété, en employant 15 ml de laurate de vinyle à la place de 15ml d'hexanoate de vinyle.

### Protocole de synthèse d'un copolymère statistique d'éthylène (77,3% molaire) et de laurate de vinyle (22,7% molaire), comparatif:

Le protocole ci-avant a été répété, en employant 30 ml de laurate de vinyle et donc 20 ml de THF. Le temps de polymérisation est de 2h30.

Les caractéristiques des polymères synthétisés selon les protocoles décrits ci-avant sont rassemblées dans le tableau I ci-dessous :

**[Tableau I]**

| Monomère de formule (II) + teneur en moles | Mw (g.mol⁻¹) | Mₙ (g.mol⁻¹) |
|---|---|---|
| Hexanoate de vinyle - 13,1% en moles | 6300 | 3500 |
| Hexanoate de vinyle - 26,4% en moles | 9500 | 6800 |
| Laurate de vinyle - 9,1% en moles | 5700 | 3800 |
| Laurate de vinyle - 22,7% en moles | 8800 | 5500 |

Les masses molaires moyennes ont été mesurées par chromatographie d'exclusion stérique dans le THF (SEC).

### Exemple 2 : Evaluation des performances de tenue à froid sur différents gazoles

Les polymères décrits dans l'exemple 1 ont été testés comme additifs de tenue à froid dans deux compositions G et G' de carburants de type gazole particulièrement difficiles à traiter, et dont les caractéristiques sont détaillées dans les tableau respectifs II et III ci-dessous :

### Gazole G :

**[Tableau II]**

| Caractéristique | Méthode | Valeur |
|---|---|---|
| Masse volumique à 15°C | ISO 12185 | 831,9 kg/m³ |
| Viscosité à 20°C | ISO 3104 | 4,3 mm²/s |
| Viscosité à 40°C | ISO 3104 | 3,1 mm²/s |
| Point de trouble (PTR)° | EN 23015 | -5°C |
| Température limite de filtrabilité (TLF) | EN 116 | -5°C |
| Teneur en paraffines | | 22,32% en poids |
| Teneur en n-paraffines C16+ | | 10,72% en poids |
| Profil de distillation D86 | ISO 3405 | |
| | Point initial | 163,2°C |
| | Point à 5% vol. | 188,8°C |
| | Point à 10% vol. | 201,8°C |
| | Point à 20% vol. | 224,5°C |
| | Point à 30% vol. | 245,4°C |
| | Point à 40% vol. | 262,7°C |
| | Point à 50% vol. | 277,1°C |
| | Point à 60% vol. | 290,2°C |
| | Point à 70% vol. | 303,1°C |
| | Point à 80% vol. | 316,9°C |
| | Point à 90% vol. | 334,0°C |
| | Point à 95% vol. | 345,8°C |
| | Point final | 3 5 1,7°C |
| | Volume distillé | 98 ml |
| | Résidu | 1,8 ml |
| | Pertes | 0,2 ml |

Gazole G' :

**[Tableau III]**

| Caractéristique | Méthode | Valeur |
|---|---|---|
| Masse volumique à 15°C | ISO 12185 | 831,2 kg/m³ |
| Viscosité à 20°C | ISO 3104 | 5,1 mm²/s |
| Viscosité à 40°C | ISO 3104 | 3,5 mm²/s |
| Point de trouble (PTR)° | EN 23015 | -3°C |
| Température limite de filtrabilité (TLF) | EN 116 | -2°C |
| Point d'écoulement (PTE) | ASTM D 7346 | -12°C |
| Teneur en paraffines | | 21,42% en poids |
| Teneur en n-paraffines C16+ | | 11,30% en poids |
| Profil de distillation D86 | ISO 3405 | |
| | Point initial | 173,0°C |
| | Point à 5% vol. | 196,6°C |
| | Point à 10% vol. | 215,4°C |
| | Point à 20% vol. | 243,4°C |
| | Point à 30% vol. | 261,9°C |
| | Point à 40% vol. | 276,0°C |
| | Point à 50% vol. | 287,7°C |
| | Point à 60% vol. | 299,3°C |
| | Point à 70% vol. | 311,4°C |
| | Point à 80% vol. | 325,5°C |
| | Point à 90% vol. | 343,7°C |
| | Point à 95% vol. | 356,2°C |
| | Point final | 359,0°C |
| | Volume distillé | 97,4 ml |
| | Résidu | 0,6 ml |
| | Pertes | 1,8 ml |

Les performances de chacun des polymères de l'exemple 1 ont été testées en évaluant leur aptitude à abaisser la température limite de filtrabilité (TLF) des compositions de gazole G et G'.

Chaque polymère a été ajouté à une teneur de 210 ppm en poids (0,021% en poids) à la composition G et à la composition G', pour donner les gazoles additivés G1 et G2 respectivement, dont on a ensuite mesuré la TLF, conformément à la norme EN 116.

Les résultats obtenus pour la composition de gazole G figurent dans le tableau IV ci-dessous :

**[Tableau IV]**

| Monomère de formule (II) + teneur en moles | TLF (°C) Gazole G1 | Différence de TLF : TLF G - TLF G1 |
|---|---|---|
| Hexanoate de vinyle- 13,1% en moles | -18°C | 13°C |
| Hexanoate de vinyle- 26,4% en moles | -5°C | 0°C |
| Laurate de vinyle- 9,1% en moles | -17°C | 12°C |
| Laurate de vinyle- 22,7% en moles | -4°C | -1°C |

Les résultats ci-dessus montrent que l'utilisation des copolymères selon l'invention conduit à un abaissement significatif de la TLF de la composition de gazole G, allant de 12 à 13 points. Les copolymères comparatifs, dont la teneur en motif ester de vinyle n'est pas conforme à l'invention, ne produisent pas d'effet sur la TLF.

Les résultats obtenus pour la composition de gazole G' figurent dans le tableau V ci-dessous :

**[Tableau V]**

| Monomère de formule (II) + teneur en moles | TLF (°C) Gazole G2 | Différence de TLF : TLF G'- TLF G2 |
|---|---|---|
| Hexanoate de vinyle- 13,1% en moles | -13°C | 11°C |
| Hexanoate de vinyle- 26,4% en moles | -4°C | 2°C |
| Laurate de vinyle- 9,1% en moles | -12°C | 10°C |
| Laurate de vinyle- 22,7% en moles | -2°C | 0°C |

Les résultats ci-dessus montrent que l'utilisation des copolymères selon l'invention conduit à un abaissement significatif de la TLF de la composition G' également, allant de 10 à 11 points. Les copolymères comparatifs, dont la teneur en motif ester de vinyle n'est pas conforme à l'invention, produisent un effet limité (2 points) ou ne produisent pas d'effet sur la TLF.

### Exemple 3 : Performances de tenue à froid sur différents gazoles - comparaison avec un copolymère d'éthylène et d'acétate de vinyle

Les performances comme additifs de tenue à froid des deux polymères selon l'invention décrits dans l'exemple 1 ont été testées, en évaluant leur aptitude à abaisser la température limite de filtrabilité (TLF) de trois compositions de gazoles différentes G, G' et G".

A titre comparatif, les performances dans les mêmes conditions d'un copolymère classique d'éthylène et d'acétate de vinyle a également été testé.

Le copolymère éthylène-acétate de vinyle de référence présente une teneur en éthylène de 86.1% molaire et une teneur en acétate de vinyle de 13.9% molaire. Sa masse molaire moyenne en nombre (*M*ₙ) mesurée par chromatographie d'exclusion stérique dans le THF (SEC) est de 1700 g.mol⁻¹, et sa masse molaire moyenne en poids (*M*_{w}) mesurée par la même méthode est de 4250 g.mol⁻¹.

Chaque polymère a été ajouté à une teneur de 140 ppm en poids (0,014% en poids) ou de 210 ppm en poids (0,021% en poids) à la composition de gazole, puis la TLF du gazole a été déterminée conformément à la norme EN 116.

Le paramètre Δ TLF correspond à la différence de TLF entre le gazole non additivé et le gazole additivé.

La première composition est le gazole G décrit dans l'exemple 2 ci-avant.

Les résultats obtenus sur le gazole G figurent dans le tableau VI ci-dessous :

**[Tableau VI]**

| Copolymère | Teneur dans le gazole G | TLF (°C) Gazole G additivé | Δ TLF : |
|---|---|---|---|
| Ethylène- acétate de vinyle | 210 ppm | -17°C | 12°C |
| Ethylène- acétate de vinyle | 140 ppm | -8°C | 3°C |
| Ethylène - hexanoate de vinyle (13,1% en moles) | 210 ppm | -18°C | 13°C |
| Ethylène - hexanoate de vinyle (13,1% en moles) | 140 ppm | -16°C | 11°C |
| Ethylène - laurate de vinyle (9,1% en moles) | 210 ppm | -17°C | 12°C |
| Ethylène - laurate de vinyle (9,1% en moles) | 140 ppm | -15°C | 10°C |

La seconde composition est le gazole G' décrit dans l'exemple 2 ci-avant.

Les résultats obtenus sur le gazole G' figurent dans le tableau VII ci-dessous :

**[Tableau VII]**

| Copolymère | Teneur dans le gazole G' | TLF (°C) Gazole G' additivé | Δ TLF : |
|---|---|---|---|
| Ethylène- acétate de vinyle | 210 ppm | -11°C | 9°C |
| Ethylène- acétate de vinyle | 140 ppm | -4°C | 2°C |
| Ethylène - hexanoate de vinyle (13,1% en moles) | 210 ppm | -13°C | 11°C |
| Ethylène - hexanoate de vinyle (13,1% en moles) | 140 ppm | -12°C | 10°C |
| Ethylène - laurate de vinyle (9,1% en moles) | 210 ppm | -12°C | 10°C |
| Ethylène - laurate de vinyle (9,1% en moles) | 140 ppm | -9°C | 7°C |

La troisième composition est le gazole G" dont les caractéristiques sont détailées dans le tableau VIII ci-dessous :

### Gasole G" :

**[Tableau VIII]**

| Caractéristique | Méthode | Valeur |
|---|---|---|
| Masse volumique à 15°C | ISO 12185 | 828,6 kg/m³ |
| Viscosité à 20°C | ISO 3104 | 3,9 mm²/s |
| Viscosité à 40°C | ISO 3104 | 2,6 mm²/s |
| Point de trouble (PTR)° | EN 23015 | -6°C |
| Température limite de filtrabilité (TLF) | EN 116 | -5°C |
| Teneur en paraffines | | 20,64% en poids |
| Teneur en n-paraffines C16+ | | 9,41% en poids |
| Profil de distillation D86 | ISO 3405 | |
| | Point initial | 157,2°C |
| | Point à 5% vol. | 183,2°C |
| | Point à 10% vol. | 191,0°C |
| | Point à 20% vol. | 212,8°C |
| | Point à 30% vol. | 234,6°C |
| | Point à 40% vol. | 255,0°C |
| | Point à 50% vol. | 272,5°C |
| | Point à 60% vol. | 287,9°C |
| | Point à 70% vol. | 302,1°C |
| | Point à 80% vol. | 317,8°C |
| | Point à 90% vol. | 336,7°C |
| | Point à 95% vol. | 348,9°C |
| | Point final | 353,0°C |
| | Volume distillé | 97,7 ml |
| | Résidu | 1,0 ml |
| | Pertes | 1,2 ml |

Les résultats obtenus sur le gazole G" figurent dans le tableau IX ci-dessous :

**[Tableau IX]**

| Copolymère | Teneur dans le gazole G" | TLF (°C) Gazole G" additivé | Δ TLF : |
|---|---|---|---|
| Ethylène- acétate de vinyle | 210 ppm | -15°C | 10°C |
| Ethylène- acétate de vinyle | 140 ppm | -8°C | 3°C |
| Ethylène - hexanoate de vinyle (13,1% en moles) | 210 ppm | -15°C | 10°C |
| Ethylène - hexanoate de vinyle (13,1% en moles) | 140 ppm | -17°C | 12°C |
| Ethylène - laurate de vinyle (9,1% en moles) | 210 ppm | -17°C | 12°C |
| Ethylène - laurate de vinyle (9,1% en moles) | 140 ppm | -17°C | 12°C |

Les résultats ci-dessus démontrent qu'à un taux de traitement de 210 ppm (0.021% en poids), les copolymères selon l'invention présentent des performances équivalentes voire légèrement supérieures aux copolymères éthylène - acétate de vinyle classiquement employés comme additifs de tenue à froid.

En revanche, à un taux de traitement de 140 ppm (0,014% en poids), les copolymères selon l'invention conduisent à des performances très supérieures par rapport aux copolymères éthylène - acétate de vinyle: ils maintiennent la TLF à un niveau équivalent à celui obtenu avec un taux de traitement de 210 ppm, tandis que les performances en termes de TLF obtenues avec le copolymère éthylène - acétate de vinyle diminuent significativement.

Ainsi, les copolymères selon l'invention constituent d'excellents additifs de tenue à froid pour les carburants et combustibles, dont les performances sont supérieures à celles du copolymère éthylène - acétate de vinyle, en ce qu'elles permettent d'abaisser la valeur de la TLF à une valeur cible donnée, à de plus faibles taux de traitement.

## Revendications

1. Utilisation, pour diminuer la température limite de filtrabilité d'une composition de carburant ou de combustible, mesurée selon la norme NF EN 116, d'un ou plusieurs copolymère(s) contenant uniquement les motifs suivants :
- de 80 à 95% en moles d'un motif de formule (I) suivante : 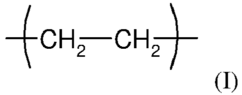 et
- de 5 à 20% en moles d'au moins un motif de formule (II) suivante : 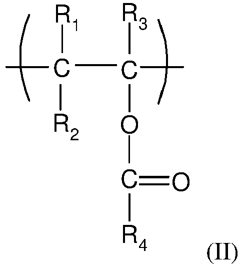 dans laquelle R₁, R₂, et R₃, identiques ou différents, représentent un atome d'hydrogène ou un groupe alkyle en C₁ à C₄, et R₄ représente un groupe alkyle linéaire en C₅ à C₁₇,
ledit copolymère ayant une masse molaire moyenne en nombre Mn comprise entre 3000 et 7000 g.mol⁻¹.

2. Utilisation selon la revendication 1, **caractérisée en ce que** dans la formule (II) R₁, R₂, et R₃, identiques ou différents, représentent un atome d'hydrogène ou un groupe méthyle, et de préférence R₁, R₂, et R₃ représentent un atome d'hydrogène.

3. Utilisation selon l'une quelconque des revendications précédentes, **caractérisée en ce que** dans la formule (II) R₄ représente un groupe alkyle linéaire en C₅ à C₁₅, de préférence en C₅ à C₁₃, plus préférentiellement encore en C₅ à C₁₁.

4. Utilisation selon la revendication précédente, **caractérisée en ce que** le ou les motifs de formule (II) sont issus du ou des monomères hexanoate de vinyle et laurate de vinyle.

5. Utilisation selon l'une quelconque des revendications précédentes, **caractérisée en ce que** le copolymère comprend de 84 à 91% en moles de motifs de formule (I).

6. Utilisation selon l'une quelconque des revendications précédentes, **caractérisée en ce que** le copolymère comprend de 9 à 16% en moles de motifs de formule (II).

7. Utilisation selon l'une quelconque des revendications précédentes, **caractérisée en ce que** le copolymère est un copolymère statistique.

8. Utilisation selon l'une quelconque des revendications précédentes, **caractérisé en ce que** le copolymère est obtenu par une réaction de polymérisation radicalaire effectuée dans un solvant organique à une pression inférieure ou égale à 20.10⁶ Pa et à une température inférieure ou égale à 150°C, de préférence une température inférieure ou égale à 120°C.

9. Utilisation selon l'une quelconque des revendications précédentes, **caractérisée en ce que** la composition de carburant ou de combustible est choisie parmi les gazoles, les biodiesels, les gazoles de type Bₓ contenant x% (v/v) d'esters d'huiles végétales ou animales ou d'acides gras avec x un nombre allant de 0 à 100, les huiles végétales hydrotraitées (HVO), et les fiouls tels que les fiouls domestiques (FOD).

10. Utilisation selon l'une quelconque des revendications précédentes, **caractérisée en ce que** ledit copolymère est employé à une teneur d'au moins 0,0005% en poids, par rapport au poids total de la composition de carburant ou de combustible, de préférence à une teneur allant de 0,001 à 0,2% en poids, plus préférentiellement de 0,005 à 0,1% en poids, et mieux encore de 0,01 à 0,03% en poids, par rapport au poids total de la composition de carburant ou de combustible.

11. Composition d'additifs comprenant un copolymère tel que défini dans l'une quelconque des revendications 1 à 8, et un ou plusieurs additif(s) de tenue à froid différent(s) des copolymères constitués de motifs de formule (I) et de motifs de formule (II), de préférence choisis parmi les additifs fluidifiant(s) à froid, les additifs d'anti-sédimentation et/ou dispersants de paraffines, les additifs boosters de TLF, et les mélanges de ces additifs.

12. Composition d'additifs selon la revendication précédente, **caractérisée en ce qu'**elle comprend un ou plusieurs additif(s) anti-sédimentation et/ou dispersant de paraffines, de préférence choisis dans le groupe constitué par les copolymères acide (méth)acrylique/(méth)acrylate d'alkyle amidifiés par une polyamine, les produits de condensation d'un ou plusieurs acides carboxyliques avec une ou plusieurs polyamines, les alkénylsuccinimides de polyamine, les dérivés d'acide phtalamique et d'amine grasse à double chaîne, les résines alkylphénol éventuellement greffées, les résines alkylphénol-aldéhydes modifiées, et plus préférentiellement encore parmi les résines alkylphénol et les résines alkylphénol greffées par exemple par des groupes fonctionnels tels que des polyamines.

13. Composition de carburant ou de combustible, comprenant :
- au moins une coupe d'hydrocarbures issue d'une ou de plusieurs sources choisies parmi le groupe consistant en les sources minérales, animales, végétales et synthétiques, et
- au moins un copolymère tel que défini dans l'une quelconque des revendications 1 à 8.

14. Composition selon la revendication précédente, **caractérisée en ce qu'**elle contient le ou les copolymère(s) en une teneur d'au moins 0,0005% en poids, par rapport au poids total de la composition de carburant ou de combustible, de préférence à une teneur allant de 0,001 à 0,2% en poids, plus préférentiellement de 0,005 à 0,1% en poids, et mieux encore de 0,01 à 0,03% en poids, par rapport au poids total de la composition de carburant ou de combustible.

15. Procédé pour abaisser la température limite de filtrabilité d'une composition de carburant ou de combustible, comprenant une étape de traitement de ladite composition avec au moins un copolymère tel que défini dans l'une quelconque des revendications 1 à 8.

## Patentansprüche

1. Verwendung eines oder mehrerer Copolymere, die nur die folgenden Einheiten enthalten, zur Verringerung der Grenztemperatur der Filtrierbarkeit einer Kraftstoff- oder Brennstoffzusammensetzung, gemessen gemäß der Norm NF EN 116:
- 80 bis 95 Mol-% einer Einheit der folgenden Formel (I): 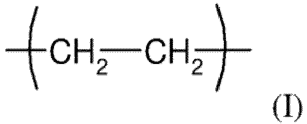 und
- 5 bis 20 Mol-% mindestens einer Einheit der folgenden Formel (II): 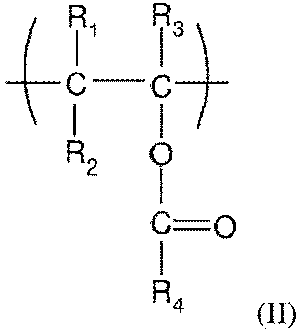
wobei R₁, R₂ und R₃, die gleich oder unterschiedlich sind, ein Wasserstoffatom oder eine C₁- bis C₄-Alkylgruppe darstellen und R₄ eine lineare C₅- bis C₁₇-Alkylgruppe darstellt,
wobei das Copolymer ein Zahlenmittel des Molekulargewichts Mn zwischen 3000 und 7000 g.mol⁻¹ aufweist.

2. Verwendung nach Anspruch 1, **dadurch gekennzeichnet, dass** in der Formel (II) R₁, R₂ und R₃, die gleich oder unterschiedlich sind, ein Wasserstoffatom oder eine Methylgruppe darstellen und vorzugsweise R₁, R₂ und R₃ ein Wasserstoffatom darstellen.

3. Verwendung nach einem der vorstehenden Ansprüche, **dadurch gekennzeichnet, dass** in Formel (II) R₄ eine lineare Alkylgruppe mit C₅ bis C₁₅, vorzugsweise C₅ bis C₁₃, noch bevorzugter C₅ bis C₁₁ darstellt.

4. Verwendung nach dem vorstehenden Anspruch, **dadurch gekennzeichnet, dass** die Einheit(en) der Formel (II) von dem/den Monomer(en) Vinylhexanoat und Vinyllaurat abgeleitet sind.

5. Verwendung nach einem der vorstehenden Ansprüche, **dadurch gekennzeichnet, dass** das Copolymer 84 bis 91 Mol-% Einheiten der Formel (I) umfasst.

6. Verwendung nach einem der vorstehenden Ansprüche, **dadurch gekennzeichnet, dass** das Copolymer 9 bis 16 Mol-% Einheiten der Formel (II) umfasst.

7. Verwendung nach einem der vorstehenden Ansprüche, **dadurch gekennzeichnet, dass** das Copolymer ein statistisches Copolymer ist.

8. Verwendung nach einem der vorstehenden Ansprüche, **dadurch gekennzeichnet, dass** das Copolymer durch eine radikalische Polymerisationsreaktion erhalten wird, die in einem organischen Lösungsmittel bei einem Druck von 20.10⁶ Pa oder weniger und bei einer Temperatur von 150 °C oder weniger, vorzugsweise bei einer Temperatur von 120 °C oder weniger, durchgeführt wird.

9. Verwendung nach einem der vorstehenden Ansprüche, **dadurch gekennzeichnet, dass** die Kraftstoff- oder Brennstoffzusammensetzung ausgewählt ist aus Gasölen, Biodiesel, Gasölen vom Typ Bₓ, die x % (Vol./Vol.) Ester von pflanzlichen oder tierischen Ölen oder Fettsäuren enthalten, wobei x eine Zahl von 0 bis 100 ist, hydrierten pflanzlichen Ölen (HVO) und Heizölen wie Heizöl (FOD).

10. Verwendung nach einem der vorstehenden Ansprüche, **dadurch gekennzeichnet, dass** das Copolymer in einem Gehalt von mindestens 0,0005 Gew.-%, bezogen auf das Gesamtgewicht der Kraftstoff- oder Brennstoffzusammensetzung, vorzugsweise in einem Gehalt von 0,001 bis 0,2 Gew.-%, bevorzugter von 0,005 bis 0,1 Gew.-% und am meisten bevorzugt von 0,01 bis 0,03 Gew.-%, bezogen auf das Gesamtgewicht der Kraftstoff- oder Brennstoffzusammensetzung, verwendet wird.

11. Additivzusammensetzung, umfassend ein Copolymer, nach einem der Ansprüche 1 bis 8, und ein oder mehrere kältebeständige Additive, die sich von Copolymeren unterscheiden, die aus Einheiten der Formel (I) und Einheiten der Formel (II) bestehen, vorzugsweise ausgewählt aus Kaltfluidisierungsadditiven, Anti-Sedimentations- und/oder Paraffindispersionsadditiven, TLF-Boosteradditiven und Mischungen dieser Additive.

12. Additivzusammensetzung nach dem vorstehenden Anspruch, **dadurch gekennzeichnet, dass** sie einen oder mehrere Antisedimentationsadditiv(e) und/oder Paraffindispergator(en) umfasst, vorzugsweise ausgewählt aus der Gruppe bestehend aus polyaminamidierten (Meth)acrylsäure/Alkyl(meth)acrylat-Copolymeren, Kondensationsprodukten von einer oder mehreren Carbonsäuren mit einem oder mehreren Polyaminen, Polyaminalkenylsuccinimiden, Derivaten von Phthalaminsäure und doppelkettigen Fettaminen, gegebenenfalls gepfropften Alkylphenolharzen, modifizierten Alkylphenolaldehydharzen und noch bevorzugter unter den Alkylphenolharzen und den Alkylphenolharzen, die beispielsweise mit funktionellen Gruppen wie Polyaminen gepfropft sind.

13. Kraftstoff- oder Brennstoffzusammensetzung, umfassend:
- mindestens eine Kohlenwasserstofffraktion aus einer oder mehreren Quellen, die aus der Gruppe ausgewählt sind, bestehend aus mineralischen, tierischen, pflanzlichen und synthetischen Quellen, und
- mindestens ein Copolymer, wie in einem der Ansprüche 1 bis 8 definiert.

14. Zusammensetzung nach dem vorstehenden Anspruch, **dadurch gekennzeichnet, dass** sie das (die) Copolymer(e) in einem Gehalt von mindestens 0,0005 Gew.-%, bezogen auf das Gesamtgewicht der Kraftstoff- oder Brennstoffzusammensetzung, vorzugsweise in einem Gehalt von 0,001 bis 0,2 Gew.-%, stärker bevorzugt von 0,005 bis 0,1 Gew.-% und noch stärker bevorzugt von 0,01 bis 0,03 Gew.-%, bezogen auf das Gesamtgewicht der Kraftstoff- oder Brennstoffzusammensetzung, enthält.

15. Verfahren zur Senkung der Grenztemperatur für die Filtrierbarkeit einer Kraftstoff- oder Brennstoffzusammensetzung, umfassend einen Schritt der Behandlung der Zusammensetzung mit mindestens einem Copolymer, wie in einem der Ansprüche 1 bis 8 definiert.

## Claims

1. Use, for decreasing the cold filter plugging point of a fuel composition, measured according to standard NF EN 116, of one or more copolymer(s) containing the following units only:
- from 80 to 95 mol% of a unit of the following formula (I) : 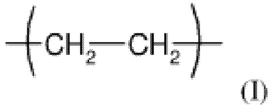 and
- from 5 to 20 mol% of at least one unit of the following formula (II): 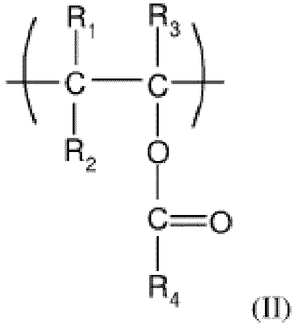
wherein R₁, R₂ and R₃, identical or different, represent a hydrogen atom or a C₁ to C₄ alkyl group, and R₄ represents a linear C₅ to C₁₇ alkyl group,
said copolymer having a number average molar mass Mn of between 3000 and 7000 g.mol⁻¹.

2. The use according to claim 1, **characterised in that** in formula (II), R₁, R₂ and R₃, identical or different, represent a hydrogen atom or a methyl group, and preferably R₁, R₂ and R₃ represent a hydrogen atom.

3. The use according to any one of the preceding claims, **characterised in that** in formula (II), R₄ represents a linear C₅ to C₁₅, preferably C₅ to C₁₃, even more preferably C₅ to C₁₁ alkyl group.

4. The use according to the preceding claim, **characterised in that** the unit or units of formula (II) are derived from the monomer or monomers vinyl hexanoate and vinyl laurate.

5. The use according to any one of the preceding claims, **characterized in that** the copolymer comprises from 84 to 91 mol% of units of the formula (I).

6. The use according to any one of the preceding claims, **characterized in that** the copolymer comprises from 9 to 16 mol% of units of the formula (II).

7. The use according to any one of the preceding claims, **characterized in that** the copolymer is a random copolymer.

8. The use according to any one of the preceding claims, **characterized in that** the copolymer is obtained by a radical polymerization reaction carried out in an organic solvent at a pressure of less than or equal to 20.10⁶ Pa and at a temperature of less than or equal to 150°C, preferably a temperature of less than or equal to 120°C.

9. The use according to any one of the preceding claims, **characterised in that** the fuel composition is selected from gas oils, biodiesels, Bₓ type gas oils containing x% (v/v) esters of vegetable or animal oils or fatty acids with x a number ranging from 0 to 100, Hydrotreated Vegetable Oils (HVO), and fuel oils such as Domestic Fuel Oils (DFO).

10. The use according to any one of the preceding claims, **characterized in that** said copolymer is employed in a content of at least 0.0005% by weight, relative to the total weight of the fuel composition, preferably in a content ranging from 0.001 to 0.2% by weight, more preferably from 0.005 to 0.1% by weight, and still more preferably from 0.01 to 0.03% by weight, relative to the total weight of the fuel composition.

11. A composition of additives comprising a copolymer as defined in any of claims 1 to 8, and one or more cold resistance additive(s) different from the copolymers consisting of units of the formula (I) and of units of the formula (II), preferably selected from cold flow additive(s), wax anti-settling and/or dispersing additives, CFPP-boosting additives, and mixtures of these additives.

12. The composition of additives according to the preceding claim, **characterised in that** it comprises one or more wax anti-settling and/or dispersing additive(s), preferably selected from the group consisting of polyamine-amidated (meth)acrylic acid/alkyl (meth)acrylate copolymers, condensation products of one or more carboxylic acids with one or more polyamines, polyamine alkenylsuccinimides, phthalamic acid and double-chain fatty amine derivatives, optionally grafted alkylphenol resins, modified alkylphenol-aldehyde resins, and even more preferably from alkylphenol resins and alkylphenol resins grafted, for example, with functional groups such as polyamines.

13. A fuel composition comprising:
- at least one hydrocarbon fraction from one or more sources selected from the group consisting of mineral, animal, vegetable and synthetic sources, and
- at least one copolymer as defined in any of claims 1 to 8.

14. The composition according to the preceding claim, **characterised in that** it contains the copolymer(s) in a content of at least 0.0005% by weight, relative to the total weight of the fuel composition, preferably in a content ranging from 0.001 to 0.2% by weight, more preferably from 0.005 to 0.1% by weight, and still more preferably from 0.01 to 0.03% by weight, relative to the total weight of the fuel composition.

15. A method for lowering the cold filter plugging point of a fuel composition, comprising a step of treating said composition with at least one copolymer as defined in any of claims 1 to 8.
